# EUROPÄISCHE PATENTSCHRIFT

(11) **EP 1 273 147 B1**
(45) Veröffentlichungstag und Bekanntmachung des Hinweises auf die Patenterteilung: **13.04.2005**
(21) Anmeldenummer: 01913618.3
(22) Anmeldetag: 13.02.2001
(51) Int. Cl.: H04L 29/06, H04L 12/56

(54) **VERFAHREN ZUM BETREIBEN EINES MOBILFUNKNETZES**
METHOD FOR OPERATING A MOBILE RADIO NETWORK
PROCEDE D'UTILISATION D'UN RESEAU DE TELEPHONIE MOBILE

(30) Priorität: 22.02.2000 DE 10008148
(43) Veröffentlichungstag der Anmeldung: 08.01.2003
(73) Patentinhaber: ROBERT BOSCH GMBH, 70442 Stuttgart (DE)
(72) Erfinder: HANS, Martin, 31141 Hildesheim (DE); BECKMANN, Mark, 38102 Braunschweig (DE)
(86) Internationale Anmeldenummer: PCT/DE2001/000536
(87) Internationale Veröffentlichungsnummer: WO 2001/063876

(56) Entgegenhaltungen:
- ETSI: "Universal Mobile Telecommunication System (UMTS); RLC Protocol Specification (3G TS 25.322 version 3.1.2 Release 1999)" ETSI TS 125.322, [Online] Januar 2000 (2000-01), Seiten 1-47, XP002168713 Gefunden im Internet: <URL:http://www.etsi.org> [gefunden am 2001-06-01] in der Anmeldung erwähnt
- 3GPP: "3rd Generation Partnership Project;Technical Specification Group Radio Access Network; Radio Interface Protocol Architecture (3G TS 25.301 version 3.3.0)" 3G TS 25.301, Dezember 1999 (1999-12), XP002164238 in der Anmeldung erwähnt
- ETSI: "Universal Mobile Telecommunications System (UMTS); MAC protocol specification" ETSI TS 125.323, [Online] Januar 2000 (2000-01), XP002169337 Gefunden im Internet: <URL:http://www.etsi.org> [gefunden am 2001-06-02] in der Anmeldung erwähnt

## Beschreibung

### Stand der Technik

Die Erfindung geht von einem Verfahren zum Betreiben eines Mobilfunknetzes nach der Gattung des Hauptanspruchs aus.

Aus der Veröffentlichung "TS 25.323 Packet Data Convergence Protocol Specification" ist bereits ein Verfahren bekannt, in dem Nutzdaten zwischen einer Mobilstation und einer Netzwerkeinheit übertragen werden, wobei die Nutzdaten vor ihrer Übertragung in einer Konvergenzprotokollschicht, die gemäß dem UMTS-Standard (Universal Mobile Telecommunication System) als PDCP-Schicht (Packet Data Convergence Protocol) bezeichnet wird, zu Paketdateneinheiten zusammengesetzt werden, wobei eine erste PDCP-Protokolleineinheit in der Mobilstation und eine zweite PDCP-Protokolleinheit in der Netzwerkeinheit eine erste logische Verbindung realisieren.

Für die Übertragung von Paketdateneinheiten werden die jeweils gesendeten Paketdateneinheiten sowohl in der Mobilstation als auch in der Netzwerkeinheit durch die entsprechende PDCP-Protokolleinheit mittels einer sogenannten PDCP-Sendefolgenummer numeriert und gespeichert und die jeweils empfangenen Paketdateneinheiten mittels einer sogenannten PDCP-Empfangsfolgenummer gezählt.

Unterhalb der Konvergenzprotokollschicht liegt eine Funkverbindungssteuerungsschicht, die gemäß dem UMTS-Standard als RLC-Schicht (Radio Link Control) bezeichnet wird und ebenfalls in der Mobilstation und in der Netzwerkeinheit vorhanden ist, wobei eine erste RLC-Protokolleinheit in der Mobilstation und eine zweite RLC-Protokolleinheit in der Netzwerkeinheit eine zweite logische Verbindung realisieren.

Die Übertragung einer Paketdateneinheit beispielsweise von der Mobilstation zur Netzwerkeinheit erfolgt dadurch, daß die Paketdateneinheit zunächst von der ersten PDCP-Protokolleinheit an die darunterliegende erste RLC-Protokolleinheit gegeben wird. In der ersten RLC-Protokolleinheit werden, gemäß des in der Veröffentlichung "TS 25.322 Radio Link Control Specification" beschriebenen verfahrens, die von höheren Schichten empfangenen Paketdateneinheiten mit einer der ersten RLC-Protokolleinheit eigenen RLC-Sendefolgennummer numeriert und gespeichert. Die RLC-Sendefolgenummer wird der Paketdateneinheit hinzugefügt und anschließend wird die Paketdateneinheit über die zweite logische Verbindung an die zweite RLC-Protokolleinheit übertragen, indem die Paketdateneinheit von der ersten RLC-Protokolleinheit an darunterliegende, für diese Erfindung nicht relevante Schichten, weitergegeben und schließlich über die Luftschnittstelle übertragen wird, um auf der Empfangsseite wiederum durch die Schichten nach oben an die zweite RLC-Protokollschicht weitergegeben zu werden.

Ist die Paketdateneinheit bei der Übertragung von der ersten RLC-Protokolleinheit zu der zweiten Protokolleinheit beschädigt worden, so benachrichtigt die zweite RLC-Protokolleinheit die erste RLC-Protokolleinheit über die fehlgeschlagene Übertragung durch Senden einer RLC-Status-Nachricht in der die zur Paketdateneinheit gehörige RLC-Sendefolgenummer als fehlerhaft übertragen gekennzeichnet ist, woraufhin die erste RLC-Protokolleinheit nach Empfang der RLC-Status-Nachricht die Übertragung der entsprechenden Paketdateneinheit wiederholt.

Ist die Paketdateneinheit fehlerfrei von der zweiten RLC-Protokolleinheit empfangen worden, gibt diese die Paketdateneinheit an die über ihr liegende PDCP-Protokolleinheit weiter und sendet eine RLC-Status-Nachricht an die erste RLC-Protokolleinheit zurück, in der die zur Paketdateneinheit gehörige RLC-Sendefolgenummer als fehlerfrei übertragen gekennzeichnet ist, woraufhin die erste RLC-Protokolleinheit die Paketdateneinheit aus ihrem Speicher löscht und die über ihr liegende erste PDCP-Protokolleinheit benachrichtigt, daß die Paketdateneinheit fehlerfrei übertragen wurde, woraufhin diese erste PDCP-Protokolleinheit die Paketdateneinheit ebenfalls aus ihrem Speicher löscht.

Das Versenden genau einer RLC-Status-Nachricht für jede fehlerfrei oder fehlerhaft von der zweiten RLC-Einheit empfangene Paketdateneinheit ist hier beispielhaft beschrieben. In der Veröffentlichung "TS 25.322 Radio Link Control Specification" werden darüber hinaus verschiedene Verfahren für das Senden und Quittieren empfangener Nachrichten durch die RLC-Protokolleinheiten aufgeführt.

Während des Aufbaus oder einer Rekonfiguration einer logischen Verbindung zwischen der ersten und der zweiten RLC-Protokolleinheit wird ein Parameter für die beiden RLC-Protokolleinheiten festgelegt, welcher entweder einen Zeitraum angibt indem die fehlerfreie Übertragung einer Paketdateneinheit zwischen den RLC-Protokolleinheit abgeschlossen sein soll, oder die maximale Anzahl der Übertragungsversuche durch die erste RLC-Protokolleinheit für eine Paketdateneinheit angegeben wird.

Wurde ein Zeitraum angegeben, so wird bei der erstmaligen Übertragung einer Paketdateneinheit durch eine erste RLC-Protokolleinheit eine Zeitmessung gestartet, die erst beendet wird wenn eine RLC-Status-Nachricht empfangen wird, welche die fehlerfreie Übertragung dieser Paketdateneinheit bestätigt. Überschreitet die Zeitmessung den festgelegten Zeitraum, so wird kein weiterer Versuch gestartet, die Paketdateneinheit zu übertragen und die Paketdateneinheit wird aus dem Speicher der ersten RLC-Protokolleinheit gelöscht.

Ist beim Aufbau oder der Rekonfiguration der zweiten logischen Verbindung eine maximale Anzahl der Übertragungsversuche angegeben worden, wird bei der erstmaligen Übertragung einer Paketdateneinheit durch die erste RLC-Protokolleinheit ein Zähler mit dem Anfangswert null gestartet, der bei jedem weiteren Übertragungsversuch um eins erhöht wird. Ist der Zähler gleich der maximalen Anzahl der Übertragungsversuche, so wird kein weiterer Versuch gestartet, die Paketdateneinheit zu übertragen und die Paketdateneinheit wird aus dem Speicher der ersten RLC-Protokolleinheit gelöscht.

Um der zweiten RLC-Protokolleinheit mitzuteilen, daß keine weiteren Übertragungsversuche folgen und die zweite RLC-Protokolleinheit die entsprechende Paketdateneinheit nicht mehr zu erwarten hat, sendet die erste RLC-Protokolleinheit eine RLC-Discard-Nachricht an die zweite RLC-Protokolleinheit, welche die RLC-Sendefolgenummer enthält, die die in der Reihenfolge der gesendeten Paketdateneinheiten nächste Paketdateneinheit angibt, für welche - bei gegebenenfalls zwischenzeitlich weiteren versendeten Paketdateneinheiten - die erste RLC-Protokolleinheit bis zu diesem Zeitpunkt keine RLC-Status-Nachricht zur Bestätigung der fehlerfreien Übertragung von der zweiten RLC-Protokolleinheit erhalten hat.

Erwartet die zweite RLC-Protokolleinheit beim Empfang der RLC-Discard Nachricht eine in der richtigen Reihenfolge nächste Paketdateneinheit mit einer kleineren RLC-Sendefolgenummer als die in der RLC-Discard Nachricht angegebene Nummer, passt die zweite RLC-Protokolleinheit den Wert der von ihr als nächstes erwarteten RLC-Sendefolgenummer an die in der RLC-Discard Nachricht empfangene RLC-Sendefolgenummer an und alle Paketdateneinheiten mit RLC-Sendefolgenummern kleiner als die in der RLC-Discard Nachricht angegebenen Nummer werden nicht mehr erwartet. Anschließend wird die RLC-Sendefolgenummer der nun als nächsten in der richtigen Reihenfolge erwarteten Paketdateneinheit in einer Bestätigungsnachricht, RLC-Discard-Confirm, an die erste RLC-Protokolleinheit zurückgesendet.

Ist eine Paketdateneinheit entgegen der Annahme der ersten RLC-Protokolleinheit doch fehlerfrei von der zweiten RLC-Protokolleinheit empfangen worden(dies kann z.B. passieren, wenn die RLC-Status Nachricht, die den fehlerfreien Empfang der Paketdateneinheit bestätigen sollte, verloren gegangen ist) so erwartet die zweite RLC-Protokolleinheit beim Empfang der RLC-Discard Nachricht eine in der richtigen Reihenfolge nächste Paketdateneinheit mit der gleichen oder einer höheren RLC-Sendefolgenummer als die in der RLC-Discard Nachricht angegebene Nummer. Dann ist keine Anpassung der zweiten RLC-Protokolleinheit notwendig und es wird anschließend eine RLC-Status Nachricht an die erste RLC-Protokolleinheit zurückgesendet, in der die zu den fehlerfrei übertragenen Paketdateneinheiten gehörigen RLC-Sendefolgenummern als fehlerfrei übertragen gekennzeichnet sind.

### Vorteile der Erfindung

Das erfindungsgemäße Verfahren zum Betreiben eines Mobilfunknetzes mit den Merkmalen des Hauptanspruchs hat demgegenüber den Vorteil, daß von der ersten Funkverbindungssteuerungsschichtprotokolleinheit bei Mißlingen der Übertragung der mindestens einen Paketdateneinheit nach Empfang einer Bestätigungsnachricht von der zweiten Funkverbindungssteuerungsschichtprotokolleinheit, die das Mißlingen bestätigt, eine Fehlermeldung an die erste Konvergenzprotokollschichtprotokolleinheit übertragen wird. Auf diese Weise kann die erste Konvergenzprotokollschichtprotokolleinheit von der ersten darunterliegenden Funkverbindungssteuerungsschichtprotokolleinheit für den Fall unterrichtet werden, daß eine Paketdateneinheit von der ersten Funkverbindungssteuerungsschichtprotokolleinheit, beispielsweise in einem beim Aufbau oder bei einer Rekonfiguration der logischen Verbindung zwischen der ersten und einer zweiten Funkverbindungssteuerungsschichtprotokolleinheit festgelegten Zeitraum oder nach einer maximalen Anzahl von Übertragungsversuchen für die mindestens eine Paketdateneinheit, nicht erfolgreich an die zweite Funkverbindungssteuerungsschichtprotokolleinheit übertragen werden konnte. Somit kann in der ersten Konvergenzprotokollschichtprotokolleinheit ein Zähler für das Zählen der versendeten Paketdateneinheiten an die Zahl der erfolgreich versendeten Paketdateneinheiten angepaßt werden. Weiterhin können nicht erfolgreich übertragene Paketdateneinheiten auch aus einem Speicher der ersten Konvergenzprotokollschichtprotokolleinheit aufgrund dieser Unterrichtung gelöscht werden, die auch vor allem für den Fall einer wiederholt erfolglosen Übertragung nicht mehr übertragen werden sollen, so daß nicht unnötig Speicherplatz in der ersten Konvergenzprotokollschichtprotokolleinheit beansprucht wird.

Besonders vorteilhaft ist es, daß diese Unterrichtung erst nach Empfang der Bestätigungsnachricht durch die erste Funkverbindungssteuerungsschichtprotokolleinheit erfolgt, wodurch die erste Funkverbindungssteuerungsschichtprotokolleinheit anhand der Bestätigungsnachricht beurteilen kann, ob die mindestens eine Paketdateneinheit tatsächlich nicht fehlerfrei von der zweiten Funkverbindungssteuerungsschichtprotokolleinheit empfangen wurde und somit der Zählerstand des Zählers in der ersten Konvergenzprotokollschichtprotokolleinheit auch tatsächlich angepaßt werden muß.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß durch die Bestätigungsnachricht der ersten Funkverbindungssteuerungsschichtprotokolleinheit das Mißlingen der Übertragung mehrerer Paketdateneinheiten und deren Nummern mitgeteilt werden und daß der ersten Konvergenzprotokollschichtprotokolleinheit von der ersten Funkverbindungssteuerungsschichtprotokolleinheit diese Nummern übermittelt werden, so daß die diesen Nummern zugeordneten Paketdateneinheiten aus dem Speicher der ersten Konvergenzprotokollschichtprotokolleinheit gelöscht werden, der Zähler um die Anzahl der nicht übertragenen Paketdateneinheiten dekrementiert wird und eine neue zu versendende Paketdateneinheit in Abhängigkeit des so dekrementierten Zählerstandes numeriert wird. Auf diese Weise kann die erste Funkverbindungssteuerungsschichtprotokolleinheit die erste Konvergenzprotokollschichtprotokolleinheit darüber informieren, welche Paketdateneinheiten tatsächlich nicht übertragen werden konnten und ermöglicht der ersten Konvergenzprotokollschichtprotokolleinheit dadurch das korrekte Anpassen des Zählerstandes sowie die korrekte Löschung der erfolglos übertragenen Paketdateneinheiten aus dem Speicher.

Durch das Übertragen der Nummern von mehreren erfolglos übertragenen Paketdateneinheiten mit der Bestätigungsnachricht wird außerdem der Vorteil bewirkt, daß nicht für jede erfolglos übertragene Paketdateneinheit eine eigene Bestätigungsnachricht übertragen werden muß, so daß Übertragungsressourcen bzw. Übertragungsbandbreite eingespart wird.

Vorteilhaft ist es jedoch auch, daß durch die Bestätigungsnachricht der ersten Funkverbindungssteuerungsschichtprotokolleinheit das Mißlingen der Übertragung genau einer Paketdateneinheit mitgeteilt wird und daß der ersten Konvergenzprotokollschichtprotokolleinheit von der ersten Funkverbindungssteuerungsschichtprotokolleinheit aufgrund dieser Mitteilung die Nummer der von der ersten Funkverbindungssteuerungsschichtprotokolleinheit zur Löschung vorgesehenen Paketdateneinheit übermittelt wird, so daß die dieser Nummer zugeordnete Paketdateneinheit aus dem Speicher der ersten Konvergenzprotokollschichtprotokolleinheit gelöscht wird, der Zähler um Eins dekrementiert wird und eine neue zu versendende Paketdateneinheit in Abhängigkeit des so dekrementierten Zählerstandes numeriert wird. Auf diese Weise sind keine zusätzlichen Informationen über die Luftschnittstelle zu übertragen, da die erste Funkverbindungssteuerungsschichtprotokolleinheit allein anhand des Empfangs der Bestätigungsnachricht selbst, das heißt ohne Auswertung ihres Inhalts oder einer mit ihr übertragenen Nummer einer erfolglos übertragenen Paketdateneinheit, beurteilen kann, ob die Paketdateneinheit tatsächlich nicht fehlerfrei von der zweiten Funkverbindungssteuerungsschichtprotokolleinheit empfangen wurde. Die Nummer der erfolglos versendeten Paketdateneinheit muß somit gar nicht mehr mit der Bestätigungsnachricht zur ersten Funkverbindungssteuerungsschichtprotokolleinheit übertragen werden, so daß ebenfalls Bandbreite bei der Übertragung der Bestätigungsnachricht eingespart werden kann.

Ein weiterer Vorteil besteht darin, daß mindestens einer im Speicher der ersten Konvergenzprotokollschichtprotokolleinheit gespeicherten Paketdateneinheit, die vor Empfang der Mitteilung über die mißlungene Übertragung versendet wurde, nach Empfang dieser Mitteilung eine neue Nummer in Abhängigkeit des dekrementierten Zählerstandes zugewiesen wird. Auf diese Weise wird sichergestellt, daß sämtliche in der ersten Konvergenzprotokollschichtprotokolleinheit noch zu speichernden Paketdateneinheiten für eine eventuell zu wiederholende Übertragung in ihrer Numerierung angepaßt werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines Mobilfunknetzes, Figur 2 ein Blockschaltbild einer Übertragung von Paketdateneinheiten zwischen zwei verschiedenen Netzwerkinstanzen und Figur 3 einen Ablaufplan für das erfindungsgemäße Verfahren.

### Beschreibung des Ausführungsbeispiels

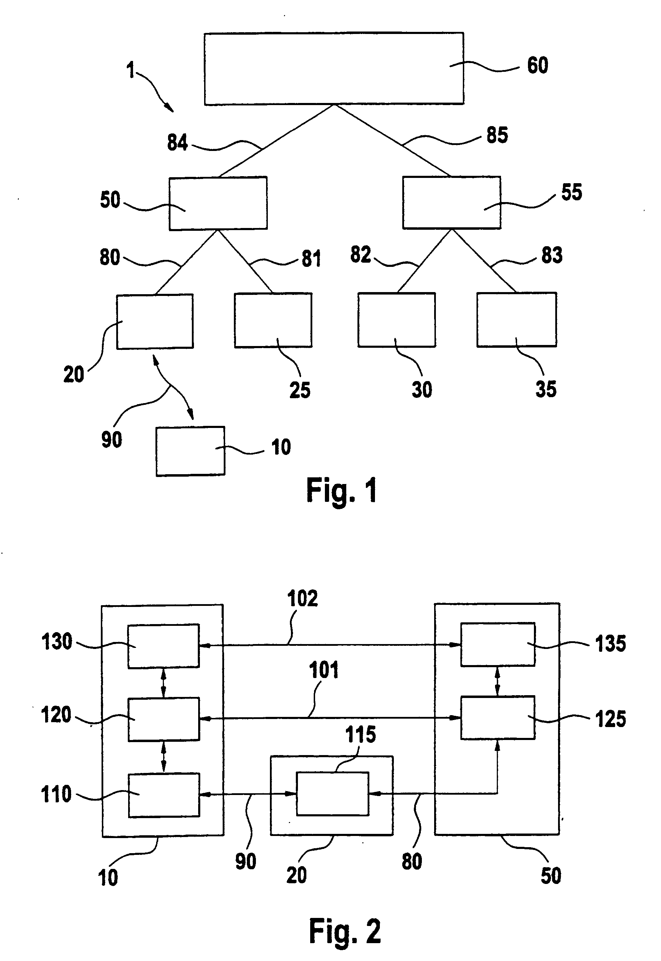

In Figur 1 kennzeichnet 10 eine als Mobilstation ausgebildete erste Netzwerkinstanz in einem Mobilfunknetz 1, wobei die Mobilstation 10 beispielsweise als mobiles Telekommunikationsendgerät ausgebildet sein kann. Die Mobilstation 10 ist über eine Luftschnittstelle 90 mit einer ersten Basisstation 20 des Mobilfunknetzes 1 verbunden. Die erste Basisstation 20 ist über eine erste Festnetzverbindung 80 mit einer ersten übergeordneten Netzwerkeinheit 50 verbunden, die eine zweite Netzwerkinstanz darstellt. Eine zweite Basisstation 25 ist über eine zweite Festnetzverbindung 81 ebenfalls mit der ersten übergeordneten Netzwerkeinheit 50 verbunden. Eine dritte Basisstation 30 ist über eine dritte Festnetzverbindung 82 mit einer zweiten übergeordneten Netzwerkeinheit 55 verbunden. Eine vierte Basisstation 35 ist über eine vierte Festnetzverbindung 83 mit der zweiten übergeordneten Netzwerkeinheit 55 verbunden. Die erste übergeordnete Netzwerkeinheit 50 ist über eine fünfte Festnetzverbindung 84 mit einer höchsten Netzwerkeinheit 60 verbunden und die zweite übergeordnete Netzwerkeinheit 55 ist über eine sechste Festnetzverbindung 85 mit der höchsten Netzwerkeinheit 60 verbunden.

Die beiden übergeordnete Netzwerkeinheiten 50, 55 bilden gemäß dem UMTS-Standard sogenannte "Radio Network Subsystems" (RNS). Die höchste Netzwerkeinheit 60 bildet gemäß dem UMTS-Standard einen sogenannten GSN (General Packet Radio System Support Node).

Im zellularen Mobilfunknetz 1 werden zur Datenübertragung zwischen der Mobilstation 10 und den übrigen an der aufgebauten Verbindung beteiligten Einheiten des Mobilfunknetzes 1 logische Verbindungen hergestellt. Dabei existieren verschiedene Arten von logischen Verbindungen zwischen der Mobilstation 10 und den verschiedenen beteiligten Einheiten eines Mobilfunknetzes 1 gleichzeitig. Diese logischen Verbindungen entstammen einem hierarchischen Modell in dem jede hierarchische Schicht einem Protokoll entspricht, das sowohl im Mobilstation 10 als auch in der entsprechenden Einheit des Mobilfunknetzes 1 vorhanden ist und das die entsprechende logische Verbindung realisiert.

Gemäß Figur 2 sind beipielhaft die logischen Verbindungen zwischen der Mobilstation 10 und der ersten übergeordneten Netzwerkeinheit 50 sowie zwischen der Mobilstation 10 und der ersten Basisstation 20 dargestellt.Die unterste hierarchische Schicht in diesem hierarchischen Modell ist durch eine erste physikalische Schicht 110 im mobilen Telekommunikationsgerät 10 und eine zweite physikalische Schicht 115 in der ersten Basisstation 20 gebildet, die eine der Luftschnittstelle 90 entsprechende physikalische Verbindung zwischen der Mobilstation 10 und der ersten Basisstation 20 des Mobilfunknetzes 1 realisieren. Darüber liegt eine Datensicherungsschicht, die gemäß dem UMTS-Standard auch als "Data Link Layer" bezeichnet wird, und in mehrere Unterschichten aufgeteilt ist und verschiedene logische Verbindungen zwischen der Mobilstation 10 und der gemäß dem UMTS-Standard als RNC (Radio Network Controller) bezeichneten ersten übergeordneten Netzwerkeinheit 50 realisiert. Eine solche Unterschicht ist gemäß dem UMTS-Standard die Funkverbindungssteuerungsschicht, die auch als RLC-Schicht (Radio Link Control) bezeichnet wird und in der eine erste als RLC-Protokolleinheit ausgebildete Funkverbindungssteuerungsschichtprotokolleinheit 120 in der Mobilstation 10 und eine zweite als RLC-Protokolleinheit ausgebildete Funkverbindungssteuerungsschichtprotokolleinheit 125 in der übergeordneten Netzwerkeinheit 50 eine zweite logische Verbindung 101 realisieren. Eine andere, der RLC-Schicht übergeordnete Unterschicht ist die Paketdaten-Konvergenzprotokollschicht, die gemäß dem UMTS-Standard auch als PDCP-Schicht (Paket Data Concvergence Protocol) bezeichnet wird und in der eine erste als PDCP-Protokolleinheit ausgebildete Konvergenzprotokollschichtprotokolleinheit 130 in der Mobilstation 10 und eine zweite als PDCP-Protokolleinheit ausgebildete Konvergenzprotokollschichtprotokolleinheit 135 in der ersten übergeordneten Netzwerkeinheit 50 eine erste logische Verbindung 102 realisieren. In den höheren hierarchischen Schichten, wie beispielsweise der Netzwerkund Transportschicht, können weitere Protokolle, wie beispielsweise das Funkressourcensteuerungsprotokoll RRC (Radio Resource Control), das Internet-Protokoll IP (Internet Protocol), das Übertragungssteuerungsprotokoll TCP (Transit Control Protocol) und dergleichen weitere logische Verbindungen aufbauen. Gemäß Figur 2 sind im hierarchischen Modell benachbarte Schichten miteinander verbunden, wobei übergeordnete Schichten die Dienste der entsprechend benachbarten untergeordneten Schichten in Anspruch nehmen. Die zweite physikalische Schicht 115 ist wie in Figur 1 angedeutet über die erste Festnetzverbindung 80 mit der übergeordneten Netzwerkeinheit 50 und dort mit der zweiten RLC-Protokolleinheit 125 verbunden.

Aus der Veröffentlichung "Technical Specification 25.301, UMTS Radio Interface Protocol Architecture" ist die entsprechende UMTS Protokoll Architektur der sogenannten Schichten 2 und 3 bekannt, zu denen auch die Paketdaten-Konvergenzprotokollschicht gehört. Insbesondere ist die Paketdaten-Konvergenzprotokollschicht und ihre Lage innerhalb dieser Architektur bekannt. Die PDCP-Protokolleinheiten 130, 135 sind aus der Veröffentlichung "Technical Specification 25.323, Packet Data Concvergence Protocol", soweit es bisher spezifiziert ist, bekannt.

Eine Aufgabe der PDCP-Protokolleinheiten 130, 135 ist die Komprimierung von Paketdaten-Kontrollinformationen, die von den Protokollen der oberhalb der Paketdaten-Konvergenzprotokollschicht liegenden Transport- und Netzwerkschicht den ebenfalls in der Paketdaten-Konvergenzprotokollschicht vor ihrer Übertragung zu einer Dateneinheit oder Paketdateneinheit zusammengesetzten Nutzdaten einer ebenfalls oberhalb der Paketdaten-Konvergenzprotokollschicht ablaufende Anwendung hinzugefügt wurden und die vor der Übertragung über die Luftschnittstelle 90 komprimiert werden müssen, um eine effiziente Übertragung zu gewährleisten.

Aus Gründen, die mit der Komprimierung von Paketdaten-Kontrollinformationen und einem möglichen Wechsel der Verbindung zwischen der Mobilstation 10 und der ersten Basisstation 20 zu einer Verbindung zwischen der Mobilstation 10 und einer Basisstation, die mit einer anderen übergeordneten Netzwerkeinheit als mit der ersten übergeordneten Netzwerkeinheit 50 verbunden ist, zum Beispiel der dritten Basisstation 30, zusammenhängen, werden die jeweils gesendeten Paketdateneinheiten sowohl in der Mobilstation 10 als auch in der ersten übergeordneten Netzwerkeinheit 50 von den über die erste logische Verbindung 102 verbundenen PDCP-Protokolleinheiten 130, 135 mit einer PDCP-Sendefolgenummer numeriert und gespeichert. Die jeweils empfangenen Paketdateneinheiten werden aus den gleichen Gründen sowohl in der Mobilstation 10 als auch in der ersten übergeordneten Netzwerkeinheit 50 von den logisch miteinander verbundenden PDCP-Protokolleinheiten 130, 135 mit einer PDCP-Empfangsfolgenummer gezählt. Da sowohl die Mobilstation 10 als auch die erste übergeordnete Netzwerkeinheit 50 Paketdateneinheiten senden und empfangen kann, müssen in jeder PDCP-Protokolleinheit 130, 135 sowohl die empfangenen als auch die gesendeten Paketdateneinheiten gezählt werden. Daher existieren die PDCP-Sendefolgenummern und PDCP-Empfangsfolgenummern sowohl im Uplink (UL), d.h. in der Übertragungsstrecke von der Mobilstation 10 zur ersten übergeordneten Netzwerkeinheit 50, als auch im Downlink (DL), d.h. in der Übertragungsstrecke von der ersten übergeordneten Netzwerkeinheit 50 zur Mobilstation 10. Die Mobilstation 10 zählt also die gesendeten Paketdateneinheiten mit der PDCP-UL-Sendefolgenummer (PDCP-UL-SSN = PDCP-UL-Send Sequence Number) und die empfangenen Paketdateneinheiten mit der PDCP-DL-Empfangsfolgenummer (PDCP-DL-RSN = PDCP-DL-Receive Sequence Number), wohingegen die erste übergeordenete Netzwerkeinheit 50 die gesendeten Paketdateneinheiten mit der PDCP-DL-Sendefolgenummer (PDCP-DL-SSN = PDCP-DL-Send Sequence Number) und die empfangenen Paketdateneinheiten mit der PDCP-UL-Empfangsfolgenummer (PDCP-UL-RSN = PDCP-UL-Receive Sequence Number) zählt.

Damit die RLC-Protokolleinheiten 120, 125, die über die zweite logische Verbindung 101 Paketdateneinheiten aneinander versenden, der jeweils anderen RLC-Protokolleinheit signalisieren können, welche Paketdateneinheit beziehungsweise welche Paketdateneinheiten fehlerhaft und welche Paketdateneinheit beziehungsweise welche Paketdateneinheiten fehlerfrei übertragen wurden, numeriert jede der RLC-Protokolleinheiten die zu sendenden Paketdateneinheiten mit einer RLC-Sendefolgenummer. Die im Uplink (UL) von der Mobilstation 10 an die erste übergeordnete Netzwerkeinheit 50 übertragenen Paketdateneinheiten werden daher mit der RLC-UL-Sendefolgenummer (RLC-UL-SSN = RLC-UL-Send Sequence Number) numeriert und die im Downlink (DL) von der ersten übergeordneten Netzwerkeinheit 50 an die Mobilstation 10 übertragenen Paketdateneinheiten werden mit der RLC-DL-Sendefolgenummer (RLC-DL-SSN = RLC-DL-Send Sequence Number) numeriert. Diese Sendefolgenummern werden dann vor der Übertragung der Paketdateneinheit hinzugefügt. Die RLC-Sendefolgenummern können auf Grund von einer in der ersten RLC-Protokolleinheit 120 durchgeführten Segmentierung, bei der eine, von der über ihr liegenden ersten PDCP-Protokolleinheit 130 empfangenen Packetdateneinheit in mehrere Paketdateneinheiten unterteilt wird, unterschiedlich von den PDCP-Sendefolgenummern sein.

Zusätzlich existiert in jeder RLC-Protokolleinheit 120, 125 ein Parameter oder Zähler, der im UMTS Standard unter VR(R) bekannt ist, der die RLC-Sendefolgenummer der nächsten, in der richtigen Reihenfolge erwarteten Paketdateneinheit angibt beziehungsweise zählt, d.h. alle Paketdateneinheiten mit RLC-Sendefolgenummern kleiner als die im Parameter VR(R) angegebene Nummer wurden bereits fehlerfrei empfangen. Der VR(R) Parameter in der ersten RLC-Protokolleinheit 120 gibt somit die RLC-DL-Sendefolgenummer der nächsten von der ersten übergeordneten Netzwerkeinheit 50 in der richtigen Reihenfolge erwarteten Paketdateneinheit an und wird der Übersichtlichkeit halber in diesem Ausführungsbeispiel im folgenden mit DL-VR(R) bezeichnet. Der Parameter VR(R) in der zweiten RLC-Protokolleinheit 125 gibt die RLC-UL-Sendefolgenummer der nächsten von der Mobilstation 10 in der richtigen Reihenfolge erwarteten Paketdateneinheit an und wird in diesem Ausführungsbeispiel der Übersichtlichkeit halber mit UL-VR(R) bezeichnet.

Die Erfindung geht nun von dem konkreten und beispielhaften Szenario aus, daß das Mobilstation 10 mit Einheiten des Mobilfunknetzes 1, wie der ersten Basisstation 20, der ersten übergeordneten Netzwerkeinheit 50 und der höchsten Netzwerkeinheit 60 über die nötigen physikalischen und logischen Verbindungen, insbesondere der von der ersten PDCP-Protokolleinheit 130 und der zweiten PDCP-Protokolleinheit 135 realisierten ersten logischen PDCP-Verbindung 102 zwischen der Mobilstation 10 und der ersten übergeordneten Netzwerkeinheit 50, verbunden ist und ein Datentransfer, also ein Austausch von Paketdateneinheiten über diese Verbindung stattfindet. In diesem Ausführungsbeispiel wird das Verfahren beispielhaft anhand der Übertragung von Paketdateneinheiten von der Mobilstation 10 an die erste übergeordnete Netzwerkeinheit 50 beschrieben. Das Verfahren ist jedoch in gleicher Weise auch für die Übertragung von Paketdateneinheiten von der ersten übergeordneten Netzwerkeinheit 50 zur Mobilstation 10 gültig.

Da das Verfahren im weiteren anhand der Übertragung von Daten im Uplink beschrieben wird, sind die Parameter DL-VR(R), RLC-DL-SSN, PDCP-DL-SSN und PDCP-DL-RSN im weiterem Ausführungsbeispiel nicht von Interesse. Weiterhin wird beispielhaft davon ausgegangen, daß die erste RLC-Protokolleinheit 120 keine Segmentierung der von der ersten PDCP-Protokolleinheit 130 empfangenen Paketdateneinheiten durchführt. Eine Paketdateneinheit, die von der ersten PDCP-Protokolleinheit 130 an die erste RLC-Protokolleinheit 120 gegeben wurde, wird somit auch als eine Paketdateineinheit an die zweite RLC-Protokolleinheit 125 gesendet. Außerdem wird beispielhaft davon ausgegangen, daß beim Aufbau der zweiten logischen Verbindung 101 zwischen den RLC-Protokolleinheiten 130 und 135, eine maximale Anzahl von 3 Übertragungsversuchen festgelegt wurde.

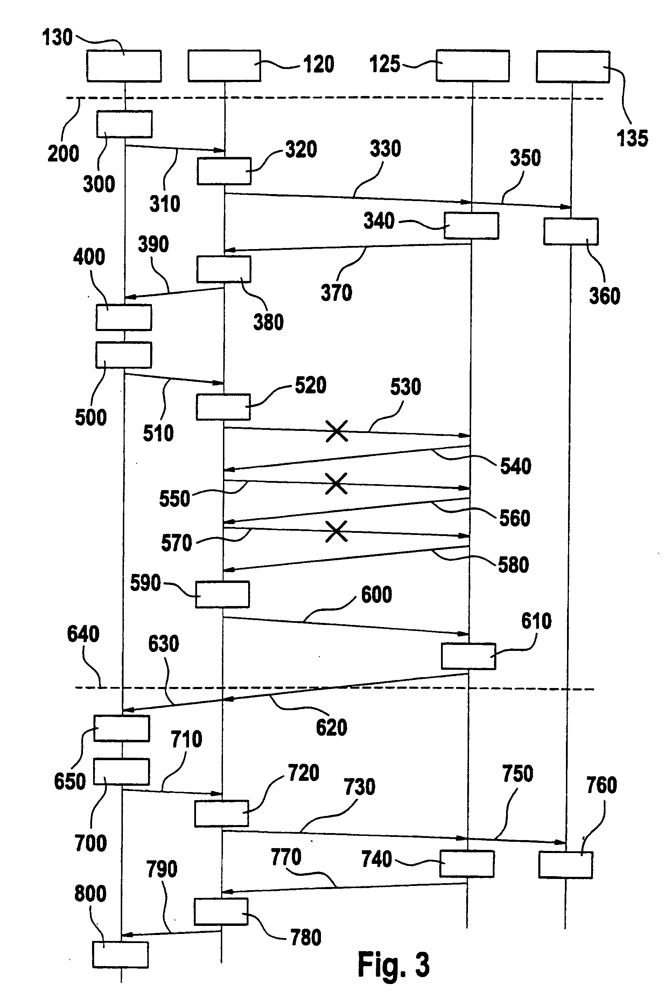

Zu einem Zeitpunkt 200, der in Figur 3 mit einer gestrichelten Linie gekennzeichnet ist, wird ebenfalls beispielhaft angenommen, daß die PDCP-UL-Sendefolgenummer in der ersten PDCP-Protokolleinheit 130 gleich der PDCP-UL-Empfangsfolgenummer in der zweiten PDCP-Protokolleinheit 135 ist und den Wert PDCP-UL-SSN = PDCP-UL-RSN = 10 hat. Weiterhin wird beispielhaft angenommen, daß die RLC-UL-Sendefolgenummer den Wert RLC-UL-SSN = 10 und der Parameter UL-VR(R) den Wert UL-VR(R)=11 hat, was bedeutet daß die zweite RLC-Protokolleinheit 125 die Paketdateneinheiten mit den UL-RLC-Sendefolgenummern 1 bis 10 empfangen hat und erwartet, daß die in der Reihenfolge nächste Paketdateneinheit mit der RLC-UL-Sendefolgenummer RLC-UL-SSN=11 numeriert ist. Die erste PDCP-Protokolleinheit 130 empfängt nun Nutzdaten von höheren Schichten, wandelt diese in eine Paketdateneinheit um und führt einem PDCP-Numerierungs- und Speichervorgang 300 durch, bei dem die Paketdateneinheit mit der PDCP-UL-Sendefolgenummer PDCP-UL-SSN=11 numeriert und abgespeichert wird. Nach einer eventuellen Komprimierung der Paketdateneinheit wird diese in einem Übertragungsschritt 310 an die erste RLC-Protokolleinheit 120 übertragen, welche einen RLC-Numerierungs- und Speichervorgang 320 durchführt, bei dem die Paketdateneinheit mit der RLC-UL-Sendefolgenummer RLC-UL-SSN=11 numeriert und abgespeichert wird. Nachdem die RLC-UL-Sendefolgenummer der Paketdateneinheit hinzugefügt wurde, wird die Paketdateneinheit in einem weiteren Übertragungsschritt 330 an die zweite RLC-Protokolleinheit 125 übertragen, welche der Paketdateneinheit die RLC-UL-Sendefolgenummer entnimmt. Da die entnommene RLC-UL-Sendefolgenummer der nächsten, in der richtigen Reihenfolge erwarteten, im Parameter UL-VR(R) festgehaltenen, RLC-UL-Sendefolgenummer entspricht (RLC-UL-SSN = UL-VR(R)), findet in der zweiten RLC-Protokolleinheit 125 ein Aktualisierungsvorgang 340 des Parameters UL-VR(R) statt, der dabei auf den Wert 12 gesetzt wird, also die Paketdateneinheit mit der RLC-UL-Sendefolgenummer 12 als nächste, in der richtigen Reihenfolge erwartete Paketdateneinheit erwartet wird. Anschließend wird in einem Übertragungsschritt 350 die Paketdateneinheit an die zweite PDCP-Protokolleinheit 135 gegeben, die daraufhin den Zählvorgang 360 einleitet, in dem die PDCP-UL-Empfangsfolgenummer um eins erhöht wird und damit den Wert PDCP-UL-RSN = 11 hat. Die PDCP-UL-Sendefolgenummer und die PDCP-UL-Empfangsfolgenummer, mit denen die Paketdateneinheit in der ersten und zweiten PDCP-Protokolleinheit 130, 135 numeriert wurde, sind somit beide gleich.

In einem weiteren Übertragungsvorgang 370 teilt die zweite RLC-Protokolleinheit 125 der ersten RLC-Protokolleinheit 120 anschließend durch eine RLC-Status-Nachricht mit, daß die Paketdateneinheit mit der RLC-UL-Sendefolgenummer RLC-UL-SSN = 11 fehlerfrei empfangen wurde. Die erste RLC-Protokolleinheit 120 löscht in einem Löschvorgang 380 daraufhin die Paketdateneinheit aus seinem Speicher und informiert die erste PDCP-Protokolleinheit 130 in einem Übertragungsvorgang 390 über die erfolgreiche Übertragung der Paketdateneinheit, worauf die erste PDCP-Protokolleinheit 130 die gespeicherte Paketdateneinheit während eines PDCP-Löschvorgangs 400 ebenfalls aus ihrem Speicher löscht.

Im weiteren wird beispielhaft angenommen, daß von höheren Schichten weitere Nutzdaten an die erste PDCP-Protokolleinheit 130 gegeben werden, welche von dieser in eine Paketdateneinheit umgewandelt und in einem PDCP-Numerierungs- und Speichervorgang 500 mit der PDCP-UL-Sendefolgenummer PDCP-UL-SSN = 12 numeriert und gespeichert wird. Nach einer eventuellen Komprimierung der Paketdateneinheit wird diese in einem Übertragungsvorgang 510 an die erste RLC-Protokolleinheit 120 weitergegeben, wo sie in einem RLC-Numerierungs- und Speichervorgang 520 mit der RLC-UL-Sendefolgenummer RLC-UL-SSN = 12 numeriert und abgespeichert wird. Die RLC-UL-Sendefolgenummer wird dann der Paketdateneinheit hinzugefügt. Es wird nun weiterhin angenommen, daß der Übertragungsversuch 530 fehlschlägt und die Paketdateneinheit nicht fehlerfrei zur zweiten RLC-Protokolleinheit 125 übertragen wurde. Durch eine im Übertragungsvorgang 540 gesendete RLC-Status-Nachricht, informiert die zweite RLC-Protokolleinheit 125 die erste RLC-Protokolleinheit 120 über die fehlgeschlagene Übertragung der Paketdateneinheit mit der RLC-UL-Sendefolgenummer RLC-UL-SSN = 12. Da die maximal erlaubte Anzahl der Übertragungsversuche noch nicht erreicht ist, startet die erste RLC-Protokolleinheit 120 einen weiteren Übertragungsversuch 550, bei dem die Paketdateneinheit nochmal zur zweiten RLC-Protokolleinheit 125 gesendet wird. Es wird jedoch angenommen, daß die Paketdateneinheit wieder nicht fehlerfrei von der zweiten RLC-Protokolleinheit 125 empfangen werden konnte, und somit ein dem Übertragungsvorgang 540 entsprechender Übertragungsvorgang 560 stattfindet. Auch ein dritter Übertragungsversuch 570 durch die erste RLC-Protokolleinheit 120 schlägt fehl, was der ersten RLC-Protokolleinheit 120 von der zweiten RLC-Protokolleinheit 125 durch den Übertragungsvorgang 580 mitgeteilt wird. Da beim Aufbau der zweiten logischen Verbindung 101 eine maximale Anzahl von 3 Übertragungsversuchen festgelegt wurde, wird nun kein neuer Versuch gestartet, um die Paketdateneinheit mit der RLC-UL-Sendefolgenummer RLC-UL-SSN = 12 nochmals zu senden. Statt dessen, wird in einem RLC-Löschvorgang 590 die Paketdateneinheit aus dem Speicher der ersten RLC-Protokolleinheit 120 gelöscht und eine RLC-Discard Nachricht in einem Übertragungsvorgang 600 an die zweite RLC-Protokolleinheit 125 geschickt, wobei die RLC-Discard Nachricht die RLC-UL-Sendefolgenummer von der in der Reihenfolge der gesendeten Paketdateneinheiten nächsten, bisher noch nicht bestätigten Paketdateneinheit enthält. In diesem Fall ist dies die RLC-UL-Sendefolgenummer RLC-UL-SSN = 13, die zu einer nächsten bisher noch nicht gesendeten Paketdateneinheit gehört. Da die in der RLC-Discard Nachricht mitgegebene RLC-UL-Sendefolgenummer größer als die von der zweiten RLC-Protokolleinheit 125 als die RLC-UL-Sendefolgenummer (UL-VR(R)) der als nächsten in der richtigen Reihenfolge erwarteten Paketdateneinheit ist, führt die zweite RLC-Protokolleinheit 125 einen Aktualisierungsvorgang 610 durch, bei dem der Parameter UL-VR(R) auf die RLC-UL-Sendefolgenummer der nächsten, in der richtigen Reihenfolge erwarteten Paketdateneinheit gesetzt wird. In diesem Beispiel ist die RLC-UL-Sendefolgenummer der nächsten in der richtigen Reihenfolge erwarteten Paketdateneinheit gleich 13, und der Parameter UL-VR(R) nimmt somit den Wert UL-VR(R) = 13 an. Zur Bestätigung, daß die Paketdateneinheit mit der RLC-UL-Sendefolgenummer tatsächlich nicht korrekt von der zweiten RLC-Protokolleinheit 125 empfangen wurde, sendet diese in einem Übertragungsvorgang 620 eine RLC-Discard Confirm Nachricht an die erste RLC-Protokolleinheit 120 zurück, wobei die RLC-Discard Confirm Nachricht den aktualisierten Wert des Parameters UL-VR(R), in diesem Fall also die RLC-UL-Sendefolgenummer RLC-UL-SSN = 13, enthält. Anhand der RLC-Discard Confirm Nachricht erkennt die erste RLC-Protokolleinheit 120, daß die inzwischen gelöschte Paketdateneinheit mit der RLC-UL-Sendefolgenummer RLC-UL-SSN = 12 tatsächlich nicht fehlerfrei an die zweite RLC-Protokolleinheit 125 übertragen werden konnte.

Folgende Probleme können bei dem bisher beschriebenen Verfahren auftreten:

Die erste PDCP-Protokolleinheit 130 hat bei dem bisher beschriebenen Verfahrens nicht erfahren, daß eine Paketdateneinheit nicht von der unter ihr liegenden ersten RLC-Protokolleinheit 120 an die zweite RLC-Protokolleinheit 125 und somit auch nicht an die zweite PDCP-Protokolleinheit 135 übertragen werden konnte. Die PDCP-UL-Sendefolgenummer wurde von der ersten PDCP-Protokolleinheit 130 für diese Paketdateneinheit vergeben, jedoch wurde von der zweiten PDCP-Protokolleinheit 135 keine PDCP-UL-Empfangsfolgenummer vergeben. PDCP-UL-Sendefolgenummer in der PDCP-Protokolleinheit 130 und PDCP-UL-Empfangsnummer in der PDCP-Protokolleinheit 135 sind somit zum Zeitpunkt 640, der mit einer gestrichelten Linie in Figur 3 angedeutet wird, nicht gleich und eine folgende Paketdateneinheit, die von der ersten PDCP-Protokolleinheit 130 an die zweite PDCP-Protokolleinheit 135 versendet würde, würde in der ersten PDCP-Protokolleinheit 130 eine PDCP-UL-Sendefolgenummer zugeordnet bekommen, die ungleich der durch die zweite PDCP-Protokolleinheit 135 bei Empfang der folgenden Paketdateneinheit vergebenen PDCP-UL-Empfangsnummer wäre.

Gemäß dieser Erfindung wird daher nun in einem weiteren Übertragungsvorgang 630 der ersten PDCP-Protokolleinheit 130 von der ersten RLC-Protokolleinheit 120 mit Hilfe einer Nachricht mitgeteilt, daß die Übertragung der Paketdateneinheit mit der RLC-UL-Sendefolgenummer RLC-UL-SSN = 12 nicht möglich war, wobei die Nachricht einen Identifikator MUI (Message Unit Identifier) enthält, welcher die Paketdateneinheit innerhalb der ersten PDCP-Protokolleinheit 130 identifiziert und der der ersten RLC-Protokolleinheit 120 bekannt ist. Die erste RLC-Protokolleinheit 120 beurteilt für den Fall, dass mit einer RLC-Discard Nachricht und deren Bestätigungsnachricht, der RLC-Discard Confirm Nachricht, die fehlerhafte Übertragung immer nur einer Paketdateneinheit signalisiert bzw. bestätigt wird, aus der Art dieser Bestätigungsnachricht, ob eine Paketdateneinheit tatsächlich nicht fehlerfrei übertragen werden konnte. So ist eine empfangene RLC-Discard Confirm Nachricht eine Bestätigung für eine fehlgeschlagene Übertragung und eine RLC-Status Nachricht eine Benachrichtigung, dass ein Paket in Wirklichkeit korrekt von der zweiten RLC-Protokolleinheit 125 empfangen wurde. Der in der RLC-Discard Confirm Nachricht enthaltene Parameter UL-VR(R) sagt dabei zusätzlich aus, welche RLC-UL-Sendefolgenummer von der zweiten RLC-Protokolleinheit 125 als die der nächsten, in der richtigen Reihenfolge erwartete Paketdateneinheit zugeordnete RLC-UL-Sendefolgenummer erwartet wird, und dass somit alle, in der ersten RLC-Protokolleinheit 120 gespeicherten Paketdateneinheiten mit RLC-UL-Sendefolgenummern kleiner als die im Parameter UL-VR(R) angegebene angegebene Nummer aus dem Speicher der ersten RLC-Protokolleinheit 120, und damit auch die entsprechenden Paketdateneinheiten aus dem Speicher der ersten PDCP-Protokolleinheit 130, gelöscht werden können. Gemäß diesem Verfahren erhält die erste PDCP-Protokolleinheit 130 durch den Übertragungsvorgang 630 die für den Aktualisierungsvorgang 650 nötigen Informationen, um die durch die Identifikatoren (MUI) angegebenen Paketdateneinheiten aus seinem Speicher zu löschen und die PDCP-UL-Sendefolgenummer der im Speicher verbliebenen Paketdateneinheiten um eins zu reduzieren. In diesem Fall heißt das, daß die nächste zu vergebende PDCP-UL-Sendefolgenummer wieder PDCP-UL-SSN = 12 ist und der nächsten zu sendenden Paketdateneinheit zugeordnet wird. Entsprechend wird ein Zähler in der ersten PDCP-Protokolleinheit 130 auf diesen Wert der PDCP-UL-SSN = 12 um Eins zurückgesetzt. Wären nach der Paketdateneinheit, deren Übertragung nicht möglich war, schon weitere Paketdateneinheiten von der ersten PDCP-Protokolleinheit 130 versendet worden, so müßten die PDCP-UL-Sendefolgenummern dieser weiteren Paketdateneinheiten ebenfalls aktualisiert, in diesem Fall also um eins reduziert werden.

Werden nun weitere Daten von höheren Schichten an die erste PDCP-Protokolleinheit 130 gegeben, wandelt diese die Daten wieder in Paketdateneinheiten um und führt einen PDCP-Numerierungs- und Speicherungsvorgang 700 durch, bei dem die Paketdateneinheit die PDCP-UL-Sendefolgenummer PDCP-UL-SSN = 12 gemäß dem Stand des Zählers in der ersten PDCP-Protokolleinheit 130 zugeordnet bekommt und gespeichert wird. Anschließend erfolgt eventuell eine Komprimierung der Paketdateneinheit und sie wird bei einem Übertragungsvorgang 710 an die unter der ersten PDCP-Protokolleinheit 130 liegenden ersten RLC-Protokolleinheit 120 gegeben. Diese führt wiederum einen RLC-Speicher- und Numerierungsvorgang 720 durch, bei der der Paketdateneinheit eine RLC-UL-Sendefolgenummer RLC-UL-SSN = 13 zugeordnet wird und die Paketdateneinheit gespeichert wird. Anschließend wird die RLC-UL-Sendefolgenummer der Paketdateneinheit hinzugefügt, welche dann bei einem Übertragungsvorgang 730 an die zweite RLC-Protokolleinheit 125 gesendet wird. Die zweite RLC-Protokolleinheit entnimmt der Paketdateneinheit die RLC-UL-Sendefolgenummer. Da die entnommene RLC-UL-Sendefolgenummer der nächsten, in der richtigen Reihenfolge erwarteten, im Parameter UL-VR(R) festgehaltenen, RLC-UL-Sendefolgenummer entspricht, findet in der zweiten RLC-Protokolleinheit 125 ein Aktualisierungsvorgang 740 des Parameters UL-VR(R) statt, der dabei auf den 14 gesetzt wird. Anschließend wird in einem Übertragungsschritt 750 die Paketdateneinheit an die zweite PDCP-Protokolleinheit 135 gegeben, die daraufhin den Zählvorgang 760 einleitet, in dem die PDCP-UL-Empfangsfolgenummer um eins erhöht wird und damit den Wert PDCP-UL-RSN = 12. Die PDCP-UL-Sendefolgenummer und die PDCP-UL-Empfangsfolgenummer, mit denen die Paketdateneinheit numeriert wurde sind somit wieder beide gleich, obwohl eine Paketdateneinheit nicht übertragen werden konnte. In einem weiteren Übertragungsvorgang 770 teilt die zweite RLC-Protokolleinheit 125 der ersten RLC-Protokolleinheit 120 anschließend durch eine RLC-Status-Nachricht mit, daß die Paketdateneinheit mit der RLC-UL-Sendefolgenummer RLC-UL-SSN = 13 fehlerfrei empfangen wurde. Die erste RLC-Protokolleinheit 120 löscht in einem Löschvorgang 780 daraufhin die Paketdateneinheit aus ihrem Speicher und informiert die erste PDCP-Protokolleinheit 130 in einem Übertragungsvorgang 790 über die erfolgreiche Übertragung der Paketdateneinheit, worauf die erste PDCP-Protokolleinheit 130 die gespeicherte Paketdateneinheit während eines PDCP-Löschvorgangs 800 ebenfalls aus ihrem Speicher löscht.

In einer alternativen Ausführungsform kann es auch vorgesehen sein, daß mehrere RLC-Discard-Nachrichten der ersten RLC-Protokolleinheit 120 in der zweiten RLC-Protokolleinheit 125 gesammelt werden und beispielsweise bei Erreichen einer vorgegebenen Anzahl oder nach einer vorgegebenen Zeit die zweite RLC-Protokolleinheit 125 eine RLC-Discard-Confirm-Nachricht an die erste RLC-Protokolleinheit 120 versendet. Denkbar ist auch, dass die erste RLC-Protokolleinheit 120 der zweiten RLC-Protokolleinheit 125 durch eine RLC-Discard-Nachricht über das Löschen mehrerer Paketdateneinheiten informiert, z.B. indem die in der RLC-Discard Nachricht enthaltene RLC-UL-Sendefolgenummer die in der Reihenfolge nächste erwartete Paketdateneinheit nach den gelöschten Paketdateneinheiten angibt, und die zweite RLC-Protokolleinheit 125 eine RLC-Discard Confirm Nachricht an die erste RLC-Protokolleinheit 120 versendet, wobei diese RLC-Discard Confirm Nachricht dann die RLC-UL-Sendefolgenummern der entsprechenden in der ersten RLC-Protokolleinheit 120 bereits gelöschten Paketdateneinheiten umfaßt, die nicht in der zweiten RLC-Protokolleinheit 125 empfangen wurden, um der ersten RLC-Protokolleinheit 120 das Mißlingen der Übertragung der entsprechenden Paketdateneinheiten mitzuteilen. Der ersten PDCP-Protokolleinheit 130 werden dann von der ersten RLC-Protokolleinheit 120 die den mit der RLC-Discard-Confirm-Nachricht empfangenen RLC-UL-Sendefolgenummern zugeordneten PDCP-UL-Sendefolgenummern übermittelt, so daß die diesen PDCP-UL-Sendefolgenummern zugeordneten Paketdateneinheiten aus dem Speicher der ersten PDCP-Protokolleinheit 130 gelöscht werden. Der Stand des Zählers in der ersten PDCP-Protokolleinheit 130 wird dann um die Anzahl der in der zweiten RLC-Protokolleinheit 125 nicht empfangenen Paketdateneinheiten reduziert. Eine neue zu versendende Paketdateneinheit wird dann in der ersten PDCP-Protokolleinheit 130 in Abhängigkeit des so dekrementierten Zählerstandes numeriert wird. Wären nach den Paketdateneinheiten, deren Übertragung nicht möglich war, schon weitere Paketdateneinheiten von der ersten PDCP-Protokolleinheit 130 versendet worden, so müßten die PDCP-UL-Sendefolgenummern dieser weiteren Paketdateneinheiten ebenfalls aktualisiert und um die Anzahl der nicht erfolgreich übertragenen Paketdateneinheiten reduziert werden.

## Patentansprüche

1. Verfahren zum Betreiben eines Mobilfunknetzes (1), in dem Nutzdaten von einer ersten Netzwerkinstanz (10) des Mobilfunknetzes (1) zu einer zweiten Netzwerkinstanz (50) des Mobilfunknetzes (1) übertragen werden, wobei die Nutzdaten vor ihrer Übertragung zu mindestens einer Paketdateneinheit in einer ersten Konvergenzprotokollschichtprotokolleinheit (130) der ersten Netzwerkinstanz (10) zusammengesetzt werden und wobei die mindestens eine Paketdateneinheit von einer ersten Funkverbindungssteuerungsschichtprotokolleinheit (120) der ersten Netzwerkinstanz (10) an eine zweite Funkverbindungssteuerungsschichtprotokolleinheit (125) der zweiten Netzwerkinstanz (50) übertragen wird, **dadurch gekennzeichnet, daß** von der ersten Funkverbindungssteuerungsschichtprotokolleinheit (120) bei Mißlingen der Übertragung der mindestens einen Paketdateneinheit nach Empfang einer Bestätigungsnachricht von der zweiten Funkverbindungssteuerungsschichtprotokolleinheit (125), die das Mißlingen bestätigt, eine Fehlermeldung an die erste Konvergenzprotokollschichtprotokolleinheit (130) übertragen wird.

2. verfahren nach Anspruch 1, **dadurch gekennzeichnet, daß** die Bestätigungsnachricht als Antwort auf eine von der ersten Funkverbindungssteuerungsschichtprotokolleinheit (120) an die zweite Funkverbindungssteuerungsschichtprotokolleinheit (125), versendeten Löschungsnachricht in der ersten Funkverbindungssteuerungsschichtprotokolleinheit (120) empfangen wird, wobei die erste Funkverbindungssteuerungsschichtprotokolleinheit (120) anhand der Löschungsnachricht der zweiten Funkverbindungssteuerungsschichtprotokolleinheit (125) mitteilt, welche mindestens eine Paketdateneinheit sie im Falle der Bestätigung der mißlungenen Übertragung durch die Bestätigungsnachricht löschen wird.

3. Verfahren nach Anspruch 1 oder 2, **dadurch gekennzeichnet, daß** mehrere von der ersten Konvergenzprotokollschichtprotokolleinheit (130) an die zweite Netzwerkinstanz (50) zu übertragende Paketdateneinheiten in der Reihenfolge ihrer Versendung fortlaufend numeriert und in einem Speicher der ersten Konvergenzprotokollschichtprotokolleinheit (130) abgelegt werden, wobei in der ersten Konvergenzprotokollschichtprotokolleinheit (130) ein Zähler entsprechend der Numerierung der gerade zu versendenden Paketdateneinheit gesetzt wird.

4. Verfahren nach Anspruch 3, **dadurch gekennzeichnet, daß** durch die Bestätigungsnachricht der ersten Funkverbindungssteuerungsschichtprotokolleinheit (120) das Mißlingen der Übertragung mehrerer Paketdateneinheiten und deren Nummern mitgeteilt werden und daß der ersten Konvergenzprotokollschichtprotokolleinheit (130) von der ersten Funkverbindungssteuerungsschichtprotokolleinheit (120) diese Nummern übermittelt werden, so daß die diesen Nummern zugeordneten Paketdateneinheiten aus dem Speicher der ersten Konvergenzprotokollschichtprotokolleinheit (130) gelöscht werden, der Zähler um die Anzahl der nicht erfolgreich übertragenen Paketdateneinheiten dekrementiert wird und eine neue zu versendende Paketdateneinheit in Abhängigkeit des so dekrementierten Zählerstandes numeriert wird.

5. Verfahren nach Anspruch 3, soweit dieser auf Anspruch 2 rückbezogen ist, **dadurch gekennzeichnet, daß** durch die Bestätigungsnachricht der ersten Funkverbindungssteuerungsschichtprotokolleinheit (120) das Mißlingen der Übertragung genau einer Paketdateneinheit mitgeteilt wird und daß der ersten Konvergenzprotokollschichtprotokolleinheit (130) von der ersten Funkverbindungssteuerungsschichtprotokolleinheit (120) aufgrund dieser Mitteilung die Nummer der von der ersten Funkverbindungssteuerungsschichtprotokolleinheit (120) zur Löschung vorgesehenen Paketdateneinheit übermittelt wird, so daß die dieser Nummer zugeordnete Paketdateneinheit aus dem Speicher der ersten Konvergenzprotokollschichtprotokolleinheit (130) gelöscht wird, der Zähler um Eins dekrementiert wird und eine neue zu versendende Paketdateneinheit in Abhängigkeit des so dekrementierten Zählerstandes numeriert wird.

6. Verfahren nach Anspruch 4 oder 5, **dadurch gekennzeichnet, daß** mindestens einer im Speicher der ersten Konvergenzprotokollschichtprotokolleinheit (130) gespeicherten Paketdateneinheit, die vor Empfang der Mitteilung über die mißlungene Übertragung versendet wurde, nach Empfang dieser Mitteilung eine neue Nummer in Abhängigkeit des dekrementierten Zählerstandes zugewiesen wird.

## Claims

1. Method for operating a mobile radio network (1) in which useful data are transmitted from a first network entity (10) in the mobile radio network (1) to a second network entity (50) in the mobile radio network (1), where the useful data, prior to being transmitted, are assembled to form at least one packet data unit in a first convergence protocol layer protocol unit (130) in the first network entity (10) and where the at least one packet data unit is transmitted from a first radio connection control layer protocol unit (120) in the first network entity (10) to a second radio connection control layer protocol unit (125) in the second network . entity (50), **characterized in that** if transmission of the at least one packet data unit fails then the first radio connection control layer protocol unit (120) transmits an error message to the first convergence protocol layer protocol unit (130) following receipt of a confirmation message from the second radio connection control layer protocol unit (125), which confirms the failure.

2. Method according to Claim 1, **characterized in that** the confirmation message is received in the first radio connection control layer protocol unit (120) as a response to a deletion message sent from the first radio connection control layer protocol unit (120) to the second radio connection control layer protocol unit (125), the first radio connection control layer protocol unit (120) using the deletion message to notify the second radio connection control layer protocol unit (125) of which at least one packet data unit it will delete if failed transmission is confirmed by the confirmation message.

3. Method according to Claim 1 or 2, **characterized in that** a plurality of packet data units which are to be transmitted from the first convergence protocol layer protocol unit (130) to the second network entity (50) are numbered continuously in the order in which they are sent and are stored in a memory in the first convergence protocol layer protocol unit (130), a counter which corresponds to the numbering of the packet data unit currently to be sent being set in the first convergence protocol layer protocol unit (130).

4. Method according to Claim 3, **characterized in that** the confirmation message notifies the first radio connection control layer protocol unit (120) of the failure of the transmission of a plurality of packet data units and of the numbers thereof, and **in that** the first convergence protocol layer protocol unit (130) is sent these numbers by the first radio connection control layer protocol unit (120), so that the packet data units associated with these numbers are deleted from the memory in the first convergence protocol layer protocol unit (130), the counter is decremented by the number of unsuccessfully transmitted packet data units, and a new packet data unit to be sent is numbered on the basis of the counter reading decremented in this manner.

5. Method according to Claim 3, in so far as it refers back to Claim 2, **characterized in that** the confirmation message notifies the first radio connection control layer protocol unit (120) of the failure of the transmission of exactly one packet data unit, and **in that** on the basis of this notification the first radio connection control layer protocol unit (120) sends the first convergence protocol layer protocol unit (130) the number of the packet data unit provided for deletion by the first radio connection control layer protocol unit (120), so that the packet data unit associated with this number is deleted from the memory in the first convergence protocol layer protocol unit (130), the counter is decremented by one, and a new packet data unit to be sent is numbered on the basis of the counter reading decremented in this manner.

6. Method according to Claim 4 or 5, **characterized in that** at least one packet data unit stored in the memory in the first convergence protocol layer protocol unit (130) which was sent before the notification about the failed transmission was received is assigned a new number, following receipt of this notification, on the basis of the decremented counter reading.

## Revendications

1. Procédé d'utilisation d'un réseau de téléphonie mobile (1), dans lequel des données utiles sont transmises par une première entité de réseau (10) du réseau de téléphonie mobile (1) à une deuxième entité de réseau (50) du réseau de téléphonie mobile (1), les données utiles étant rassemblées avant leur transmission en au moins une unité de données en paquets dans une première unité de protocole de couche de protocole de convergence (130) de la première entité de réseau (10) et au moins une unité de données en paquets étant transmise par une première unité de protocole de couche de commande de liaison téléphonique (120) de la première entité de réseau (10) à une deuxième unité de protocole de couche de commande de liaison téléphonique (125) de la deuxième entité de réseau (50),
**caractérisé en ce qu'**
un message d'erreur est transmis à la première unité de protocole de couche de protocole de convergence (130) par la première unité de protocole de couche de commande de liaison téléphonique (120), en cas d'échec de la transmission d'au moins une unité de données en paquets, après réception d'un avis de confirmation de la deuxième unité de protocole de couche de commande de liaison téléphonique (125), qui confirme l'échec.

2. Procédé selon la revendication 1,
**caractérisé en ce que**
l'avis de confirmation est reçu en réponse à un avis d'annulation dans la première unité de protocole de couche de commande de liaison téléphonique (120) envoyé par la première unité de protocole de couche de commande de liaison téléphonique (120) à la deuxième unité de protocole de couche de commande de liaison téléphonique (125), la première unité de protocole de couche de commande de liaison téléphonique (120) communiquant à la deuxième unité de protocole de couche de commande de liaison téléphonique (125), à l'aide de l'avis d'annulation, quelle unité de données en paquets elle annulera en cas de confirmation de l'échec de la transmission par l'avis de confirmation.

3. Procédé selon la revendication 1 ou 2,
**caractérisé en ce que**
plusieurs unités de données en paquets à transmettre par la première unité de protocole de couche de protocole de convergence (130) à la deuxième entité de réseau (50) sont numérotées consécutivement selon l'ordre de leur envoi et sont stockées dans une mémoire de la première unité de protocole de couche de protocole de convergence (130), un compteur correspondant à la numérotation de l'unité de données en paquets, qui doit précisément être envoyée, étant réglé dans la première unité de protocole de couche de protocole de convergence (130).

4. Procédé selon la revendication 3,
**caractérisé en ce que**
l'échec de la transmission de plusieurs unités de données en paquets ainsi que leurs numéros sont communiqués à la première unité de protocole de couche de commande de liaison téléphonique (120) par l'avis de confirmation et ces numéros sont transmis par la première unité de protocole de couche de commande de liaison téléphonique (120) à la première unité de protocole de couche de protocole de convergence (130), de sorte que les unités de données en paquets associées à ces numéros soient effacées de la mémoire de la première unité de protocole de couche de protocole de convergence (130), que l'on réduise le compteur du nombre des unités de données en paquets dont la transmission a échoué, et que l'on numérote une nouvelle unité de données en paquets à envoyer en fonction de la position du compteur ainsi diminuée.

5. Procédé selon la revendication 3, dans la mesure où celle-ci se réfère à la revendication 2,
**caractérisé en ce que**
l'échec de la transmission d'une unité précise de données en paquets est communiqué à la première unité de protocole de couche de commande de liaison téléphonique (120) par l'avis de confirmation et le numéro de l'unité de données en paquets dont l'annulation est prévue par la première unité de protocole de couche de commande de liaison téléphonique (120) est transmis à la première unité de protocole de couche de protocole de convergence (130) par la première unité de protocole de couche de commande de liaison téléphonique (120) sur la base de cette communication, de sorte que l'unité de données en paquets associée à ce numéro soit annulée dans la mémoire de la première unité de protocole de couche de protocole de convergence (130), que le compteur soit diminué d'une unité et qu'une nouvelle unité de données en paquets à envoyer soit numérotée en fonction de la position du compteur ainsi diminuée.

6. Procédé selon la revendication 4 ou 5,
**caractérisé en ce qu'**
un nouveau numéro est attribué, en fonction de la position diminuée du compteur, à au moins une unité de données en paquets stockée dans la mémoire de la première unité de protocole de couche de protocole de convergence (130), qui avait été envoyée avant la réception de la communication relative à l'échec de la transmission, et ce après la réception de cette communication.
